# DEMANDE DE BREVET EUROPEEN

(11) **EP 2 174 822 A1**
(43) Date de publication de la demande: **14.04.2010**
(21) Numéro de dépôt: 09170789.3
(22) Date de dépôt: 21.09.2009
(51) Int. Cl.: B60K 15/063

(54) **Véhicule comportant un réservoir d'additifs carburant et un réservoir d'agent de réduction sélective**

(30) Priorité: 13.10.2008 FR 0856905
(71) Demandeur: Peugeot Citroën Automobiles SA, 78140 Vélizy-Villacoublay (FR)
(72) Inventeur: Crepeau, Gérald, 92700 Colombes (FR); Maire, François, 92400 Courbevoie (FR); Guerin, Stéphane, 92250 La Garenne Colombes (FR); Giraud, David, 92400 Courbevoie (FR)
(74) Mandataire: Ménès, Catherine

(57) **Abrégé**

L'invention concerne un véhicule comportant un moteur thermique (1) - alimenté en carburant par un réservoir de carburant (2) associé par des premiers moyens d'injection à un réservoir d'additifs carburant (10), et un réservoir (36) d'agent de réduction sélective associé à des seconds moyens d'injection de cet agent de réduction sélective dans la ligne d'échappement (30) du moteur, caractérisé en ce que le réservoir d'additifs carburant (10) est placé dans ou à côté du réservoir (36) d'agent de réduction sélective.

## Description

La présente invention concerne un véhicule comportant un moteur thermique, équipé à la fois d'un système de traitement par réduction catalytique sélective, des oxydes d'azote émis par le moteur et d'un système d'additivation du carburant utilisé par le moteur thermique.

Les moteurs thermiques tels que ceux utilisés par les véhicules particuliers ou les véhicules de type poids lourd, émettent un certain nombre d'émission qu'il convient de limiter pour minimiser la dissipation de polluants comme par exemple des oxydes d'azote, du monoxyde de carbone ou des particules constituées par exemple par des hydrocarbures imbrûlés.

C'est pourquoi ces dernières années ont vu se multiplier les équipements de traitement des gaz d'échappement du moteur. Nombre de ces traitements supposent le recours à des additifs stockés dans des réservoirs spécifiques pour aider d'une part à la réduction de certains composés comme l'oxyde d'azote et d'autre part à l'oxydation d'autres composés comme des hydrocarbures imbrûlés ou des suies.

La réduction sélective des oxydes d'azote est pratiquée couramment pour l'épuration des fumées d'usines stationnaires, en utilisant à titre d'agent sélectif de l'ammoniac stocké dans un réservoir approprié. Compte tenu du caractère toxique de l'ammoniac et du risque de fuite inhérent à l'industrie automobile, notamment en cas d'accident, pour les véhicules on utilise plutôt un précurseur d'ammoniac, tel que de l'urée pure ou en solution aqueuse. L'urée ou la solution d'urée est injectée dans la ligne d'échappement ; l'eau contenue dans la solution se vaporise puis l'urée (NH₂)₂C0 est décomposée en ammoniac et en acide isocyanique, ledit acide étant lui-même hydrolysé par thermolyse. L'injection d'urée dans la ligne d'échappement doit être effectuée de manière continue et précisément dosée, afin d'une part de traiter l'ensemble des oxydes d'azote présents et d'autre part, d'éviter l'émission intempestive d'ammoniac. Pour maximiser les intervalles de maintenance, et les rendre essentiellement compatibles avec les fréquences de remplacement de l'huile de lubrification du moteur, on utilise typiquement des réservoirs d'urée d'une capacité de l'ordre d'une cinquantaine de litres, c'est-à-dire d'un volume sensiblement égal à celui d'une roue, et logés par exemple à un emplacement normalement dédié à une roue de secours.

Par ailleurs, pour limiter les émissions de particules, en particulier avec des moteurs utilisant un carburant de type diesel, les lignes d'échappement sont également équipées de filtres, dits filtres à particules, qui piègent notamment les particules imbrûlées du fait d'une température des gaz d'échappement essentiellement trop faible. Périodiquement, ces filtres doivent être régénérés en augmentant temporairement la température des gaz d'échappement pour brûler les particules filtrées. De façon connue, si le carburant contient un additif tel un composé organométallique ou d'une dispersion colloïdale de particules d'un composé métallique et de particules d'une terre rare, la température d'auto-inflammation des particules imbrûlées est abaissée et peut alors être obtenue en plaçant le moteur dans des conditions plus proches des conditions normales de fonctionnement que celles requises par exemple avec un filtre à particules muni d'un revêtement catalytique.

Après chaque remplissage, même partiel, du réservoir de carburant, on détermine précisément le volume de carburant qui a été ajouté et la quantité d'additif à ajouter pour maintenir une concentration en additif dans le carburant prédéterminée. Cet additif est ajouté au carburant, directement dans le réservoir carburant du véhicule, de manière très précisément dosée, suite à tout appoint de carburant.

De façon également connue, en complément ou en remplacement de ces additifs d'aide à la régénération du filtre à particules, on peut également prévoir une série d'additifs qui vont par exemple prévenir la formation de mousse ou de givre, réduire les pertes par friction dans le moteur, ou plus généralement aider au bon fonctionnement du moteur et des équipements associés.

Ces additifs sont maintenant disponibles sous forme très concentrée, de sorte qu'un réservoir d'une contenance de l'ordre de deux litres peut être suffisant pour toute la durée de vie d'un moteur standard.

Compte tenu de la sévérisation des normes anti-pollution, il peut être souhaité d'équiper un véhicule à la fois d'un système très performant pour la réduction des oxydes d'azote et d'un système très performant pour éliminer les particules, en combinant dans une ligne d'échappement des moyens de type SCR et des moyens de type filtre à particules associés à des moyens pour enrichir le carburant en additifs.

Comme indiqué précédemment, le réservoir d'urée est habituellement situé à l'emplacement habituel d'une roue de secours, donc typiquement vers l'arrière du véhicule lorsque le compartiment moteur est à l'avant du véhicule. Par contre, le réservoir d'additifs carburant, d'un moindre encombrement, est logé dans le compartiment moteur, ou entre ce dernier et le réservoir du carburant, lui-même le plus souvent dans une position relativement centrale, par exemple sous le plancher du véhicule, au niveau des passagers arrières.

Or les auteurs de la présente invention ont trouvé qu'une telle disposition n'était pas optimale et qu'un rapprochement du réservoir d'additifs carburants et du réservoir d'urée présentait de nombreux avantages.

C'est pourquoi la présente invention a pour objet un véhicule comportant un moteur thermique - alimenté en carburant par un réservoir de carburant associé par des premiers moyens d'injection à un réservoir d'additifs carburant, et un réservoir d'un agent de réduction sélective associé à des seconds moyens d'injection de cet agent de réduction sélective dans la ligne d'échappement du moteur, **caractérisé en ce que** le réservoir d'additifs carburant est placé dans ou à côté du réservoir d'agent de réduction sélective.

A noter que le terme « agent de réduction sélective » est utilisé pour désigner le produit injecté dans la ligne d'échappement, et non nécessairement le produit réagissant effectivement avec les oxydes d'azote ; en d'autres termes, le terme pourra indifféremment désigné un produit tel que de l'ammoniac ou un précurseur tel que de l'urée. Par la suite, par commodité de langage, nous désignerons également le réservoir d'un agent de réduction sélective par le terme « réservoir SCR », et cet agent par le terme « agent SCR ».

Au sens de l'invention, l'expression « à côté du réservoir » s'entend comme permettant de chauffer au moins une fraction du volume d'additif carburant de par la proximité des moyens de chauffage associés à au moins une partie du réservoir d'agent sélective ou par cet agent chauffé lui-même. Une première possibilité est que les moyens de chauffage soient tels qu'ils produisent un chauffage direct de l'additif carburant et de l'agent SCR, à l'exemple d'une résistance électrique traversant successivement les deux réservoirs Tel peut être également le cas lorsqu'une paroi du réservoir carburant est baignée par l'agent SCR, lui-même chauffé par exemple par une résistance électrique placée dans le réservoir SCR.

Dans une variante préférée de l'invention, le réservoir d'additif carburant et le réservoir SCR sont placés dans un carter commun.

Comme indiqué précédemment, la capacité du réservoir d'additif est de l'ordre du dixième de celle du réservoir SCR, de sorte qu'en plaçant le réservoir d'additif près de ce réservoir SCR, on peut en quelque sorte bénéficier « gratuitement » du chauffage du réservoir SCR. Or ce chauffage du réservoir SCR est nécessaire car comme indiqué précédemment, une solution d'urée est communément utilisée à titre d'agent SCR. Plus précisément, on utilise une solution aqueuse à 32,5%, commercialisée sous le nom de « AdBlue », marque déposée de l'Association Allemande de l'Industrie Automobile, qui gèle si sa température est inférieure à environ -10°C, c'est-à-dire à une température hivernale relativement courante dans de nombreuses régions du globe.

Pour le réservoir d'additifs, on utilise normalement une solution dont la concentration en additifs est telle que son injection dans le réservoir est possible même par -30°C, de sorte que normalement, des moyens de chauffage ne sont pas prévus. Pour autant, si comme proposé selon l'invention on peut bénéficier des moyens de chauffage prévus pour le réservoir SCR, on peut augmenter la concentration en produits actifs dans le réservoir d'additifs et/ou la variété des additifs utilisés.

Indépendamment de l'aspect chauffage, rapprocher les deux réservoirs permet également une meilleure intégration des moyens de pilotage du réservoir. Ainsi, dans une variante de réalisation de l'invention, le véhicule est de plus tel que les premier et second moyens d'injection sont au moins pour partie pilotés par une unité de contrôle moteur placée à distance des réservoirs d'additifs et d'agent de réduction sélective, et en ce que les commandes de pilotage transitent par une ligne de commande commune.

Par ailleurs, le rapprochement des deux réservoirs permet également de rapprocher les moyens destinés au remplissage de ces réservoirs, notamment les bouchons d'accès, et de les protéger par une trappe commune, avantageusement habituellement masquée par exemple par le tapis de sol protégeant le plancher du coffre à bagages, ceci afin qu'un utilisateur non averti ne la confonde avec la trappe du réservoir de carburant par exemple.

Dans une variante, le réservoir d'agent de réduction sélective est un réservoir d'une solution aqueuse d'urée.

Dans une variante, ce réservoir d'agent de réduction sélective a une capacité comprise entre 20 et 80 litres, de préférence comprise entre 40 et 60 litres.

Dans une variante, le réservoir d'additifs carburant comprend au moins une solution d'un additif d'aide à la régénération d'un moyen de dépollution placé dans la ligne d'échappement du véhicule. De préférence, ledit moyen de dépollution est un filtre à particules. De préférence encore, ladite solution d'additif comporte au moins un additif complémentaire choisi dans le groupe comprenant un additif d'amélioration de la distribution de carburant dans le moteur, un additif d'amélioration des performances de fonctionnement du moteur, et un additif d'amélioration de la stabilité du fonctionnement du moteur. De préférence, le réservoir d'additifs carburant a une capacité comprise entre 1 et 3,5 litres.

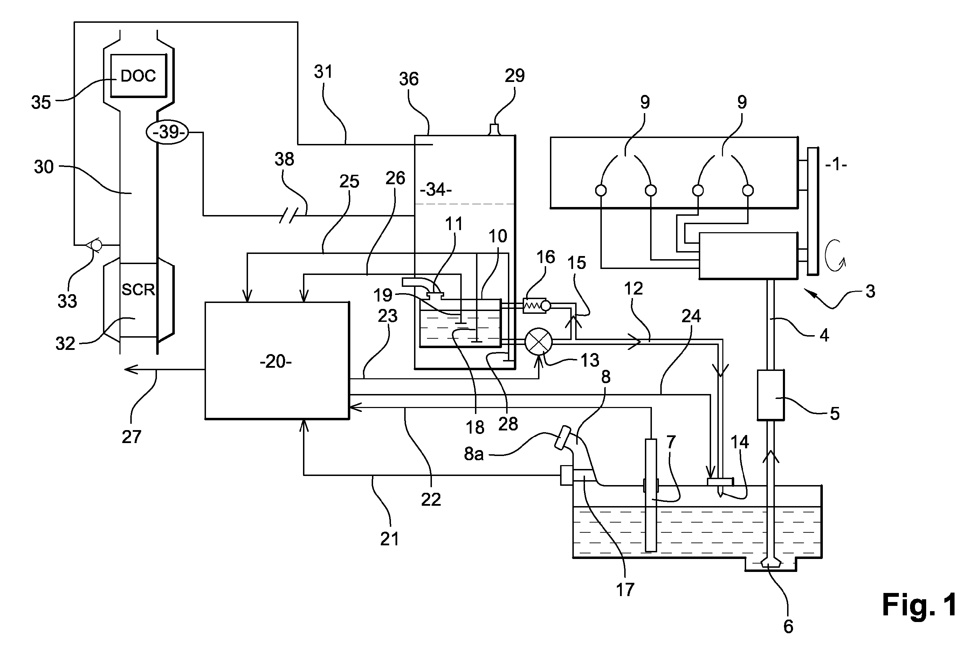

L'invention sera mieux comprise à la lecture de la description qui va suivre, donnée uniquement à titre d'exemple et faite en se référant aux dessins annexés, sur lesquels la figure 1 représente un schéma synoptique illustrant la structure et le fonctionnement d'un dispositif d'introduction de moyens formant additif couplé à un système SCR selon l'invention

Comme cela a été mentionné précédemment, le but de l'invention est de proposer un système de traitement par réduction catalytique sélective d'oxydes d'azote, dit système SCR, couplé avec un dispositif d'introduction automatique en quantités ciblées de moyens formant additif dans le réservoir de carburant d'un véhicule automobile afin d'améliorer les prestations du moteur de celui-ci ainsi que la durabilité d'un véhicule par exemple Diesel.

Un tel dispositif permet alors d'améliorer la durabilité des motorisations Diesel en agissant sur l'usure moteur, l'encrassement des injecteurs, le grippage par exemple d'une pompe d'injection et des injecteurs, la propreté de celui-ci. etc.. Un tel dispositif permet également d'améliorer l'agrément de conduite notamment en termes de bruit, de facilité de démarrage, de puissance ou encore de consommation. De plus, un tel dispositif doit également faciliter le respect des réglementations relatives aux émissions polluantes des moteurs. telles que par exemple les fumées, etc. Enfin, un tel dispositif doit également permettre l'utilisation d'additifs pouvant être adaptés en fonction des besoins.

Un tel dispositif met alors en oeuvre des dispositifs d'additivation déjà développés dans les véhicules à motorisation Diesel. Plusieurs caractéristiques liées au fonctionnement des moteurs sont en effet reconnues comme généralement très importantes pour les clients. Leur importance relative dépend du type du moteur et du cycle utilisé, mais on peut considérer que parmi ces caractéristiques importantes, on trouve
- le démarrage et l'opérabilité à froid,
- l'usure moteur.
- l'encrassement du moteur et des injecteurs,
- le grippage des pompes et des injecteurs,
- la puissance.
- le bruit,
- la maintenance du filtre à carburant,
- la consommation en carburant,
- l'intervalle de vidange,
- les émissions polluantes, etc..

La définition d'un moteur à un impact d'ordre un sur la plupart de ces caractéristiques**.** Cependant, ces dernières sont affectées par les propriétés du carburant et par conséquent, par la présence ou non d'additifs ainsi que leur concentration dans celui-ci

Dans le dispositif selon l'invention, on propose d'utiliser un mélange d'additifs.

Cet additif peut être un additif d'aide à la régénération des moyens de dépollution intégrés dans la ligne d'échappement du moteur. Il est possible d'inclure des sels ou complexes ou solutions colloïdales métalliques en tant qu'additifs d'aides à la régénération du FAP. Un grande variété de métaux peuvent être choisis, en combinaison ou non : métaux alcalins, comme le Na, métaux terres rares tels les lanthanides, métaux de nombre atomiques 51 à 71, tel le Ce, Mg, ou Sr, métaux du groupe Vlb, tels Ti ou Zr, métaux du groupe VIIB, tel le Mn, métaux du groupe VIII, tel le Fe, métaux du groupe IB, tel le Cu, métaux du groupe IIB tel le Zn. Or il s'avère que les métaux d'usures ou résultants du process de conditionnement du FAP ou de l'huile moteurs participent à la régénération du FAP. Ainsi il n'est nécessaire d'utiliser que très peu ou pas d'additifs d'aide à la génération du FAP afin de régénérer le FAP additivé, catalysé ou nu (0 à 7 ppm de métal).

Le mélange d'additifs peut également comporter un ou plusieurs additifs qui peuvent être utilisés pour une très large variété d'objectifs, même si cependant ils peuvent être groupés dans trois catégories majeures. à savoir :
- les additifs d'amélioration de la distribution de carburant dans le moteur,
- les additifs d'amélioration de performances du moteur, et
- les additifs d'amélioration de la stabilité de fonctionnement de celui-ci.

Parmi les additifs d'amélioration de la distribution de carburant dans le moteur, on trouve par exemple des additifs anti-mousse. Certains carburants Diesel ont en effet tendance à mousser lorsqu'ils sont pompés dans le réservoir du véhicule. Cette mousse peut perturber le remplissage complet du réservoir. La plupart des additifs anti-mousse sont des organosilicones et sont utilisés à des concentrations de 10 ppm au moins.

Le réservoir d'additifs carburant peut également comprendre des additifs dégivrants qui permettent d'éviter que l'eau libre présente dans des gazole ne givre et forme des cristaux de glace qui peuvent boucher des lignes du circuit de carburant ou des filtres de carburant. Comme additifs dégivrants on peut utiliser des alcools de poids moléculaire bas et/ou des glycols qui se dissolvent préférentiellement dans l'eau libre et ainsi, abaissent le point réfrigérant du gazole.

D'autres additifs sont des additifs d'opérabilité à froid. La plupart de ces additifs sont des polymères qui réagissent réciproquement avec les cristaux que forme le carburant quand ce dernier est refroidi en dessous de son point de trouble. Ces polymères atténuent effet des cristaux sur le débit du carburant en modifiant leur dimension, leur forme et/ou leur degré d'agglomération et sont surtout efficaces s'ils sont mélangés dans le carburant avant que tout cristal ne soit formé, c'est-à-dire quand le carburant est au dessus de son point de trouble. Ces additifs apportent alors des gains en température avant que le carburant ne se trouble ou se fige.

Des additifs d'écoulement, tels des polymères de hauts poids moléculaires qui réduisent la turbulence dans les fluides, peuvent augmenter de 20 à 40% le débit dans la pompe à carburant du moteur. Quand ce produit traverse une pompe, l'additif est brisé en plus petites molécules, ce qui n'entraîne aucun effet sur les performances du moteur.

Des additifs inhibiteurs de corrosion peuvent également être utilisés. Ces inhibiteurs de corrosion sont des composés qui s'attachent aux surfaces du métal et forment une barrière qui prévient l'attaque par des agents corrosifs. Ils sont situés dans une gamme de concentration de 5 ppm à 15 ppm.

On peut également améliorer certaines performances de fonctionnement des moteurs avec des additifs procétanes, tels que le 2-Ethylhexyl-nitrate (EHN). En se décomposant aux hautes températures présentes dans la chambre de combustion du moteur, l'EHN raccourcit la période du délai d'auto-inflammation du carburant. L'EHN est usuellement utilisé dans une gamme de concentration variant de 0.05% en masse à0.4% en masse et permet d'augmenter de 3 à 8 points l'indice de cétane du carburant. 'autres nitrates d'alkyl ou nitrates d'éther et quelques composés nitreux, sont également des additifs de type procétane possibles. Le dl-tertiaire butyl peroxyde a été introduit récemment sur le marché.

Des additifs détergents permettent pour leur part de minimiser la formation de dépôt (ou de dissoudre ceux déjà formés) en particulier dans les trous des injecteurs, et donc d'éviter une modification de l'aérodynamique du jet de l'injecteur, modification qui à son tour peut entraver le mélange air-carburant et conduire à une surconsommation de carburant, une perte de puissance du moteur et des émissions de polluants augmentées. De tels additifs détergents sont par exemple du polyisobutène succinimine amide ou amine (PISSA), polymères sans cendre, dérivés d'alkylphénols, amides d'acides gras) Les additifs détergents sont utilisés dans la gamme de concentration de 10 ppm à 1 000 ppm par kilo de carburant.

Des additifs d'amélioration du pouvoir lubrifiant peuvent également être utilisés pour éviter le grippage des pompes à haute pression notamment et des injecteurs, à cause du mauvais pouvoir lubrifiant des carburants. Ils contiennent un groupe polaire qui est attiré par les surfaces métalliques pour former un film de protection à la surface. Le film agit comme une huile lorsque deux surfaces métalliques entrent on contact. Deux types de fonctionnalité chimique de ces additifs, acide gras et esters, sont couramment utilisés. Les acides gras sont utilisés dans la gamme de concentration de 10 ppm à 50 ppm. Puisque les esters sont moins polaires, ils exigent une plus haute gamme de concentration de 50 ppm à 250 ppm.

Des composés organométalliques dit additifs inhibiteurs de fumées peuvent également être utilisés. Ces composés agissent comme catalyseurs de combustion et permettent de réduire les émissions de fumées noires qui résultent d'une combustion incomplète.

On connait également des additifs dits FM pour « Friction Modifier » ou FE pour « Fuel Economy » qui permettent de réduire les frottements dans le circuit carburant et/ou dans la chambre de combustion entraînant ainsi un gain on matière de consommation de carburant. Sur certains véhicules, des gains en consommation supérieurs à 4% ont été constatés lors d'essais

De même, des additifs antioxydants, tes que la phénylenediamine, utilisés dans une gamme de concentration comprise entre 10ppm et 80ppm, peuvent également aider à éviter la formation de gommes qui participent à l'encrassement des injecteurs, au colmatage du filtre à carburant et à l'encrassement des pompes et du système d'injection.

On peut encore mentionner des additifs stabilisateurs visant à prévenir des réactions acide-base qui tendent à augmenter l'instabilité du carburant. Ces additifs peuvent être des amines de base fonte et sont utilisés dans la gamme de concentration de 50 ppm à 150 ppm.

Il est également avantageux de prévoir des additifs désactivateurs de métaux, qui neutralisent les effets catalytiques de métaux présents dans le carburant à l'état de trace (Cu et Fe par exemple). Ils sont utilisés dans la gamme de concentration de 1 ppm à 15 ppm.

Enfin, on connait des additifs dispersants qui préviennent l'agglomération de particules et la formation d'amas assez gros pour boucher le filtre à carburant ou les injecteurs de carburant. Les additifs dispersants sont utilisés dans une gamme de concentration de 15 ppm à 100 ppm.

L'énumération faite ci-dessus, qui ne se veut certainement pas exhaustive, montre qu'il peut être avantageux de disposer d'une solution comportant une multiplicité d'additifs, de préférence en solution très concentrée, ce qui permet de minimiser les opérations de remplissage et de prévoir des mélanges offrant un spectre très large de performance, même si l'ensemble de ces performances ne sont que très rarement nécessaires simultanément, ceci afin notamment de favoriser le bon fonctionnement du véhicule même dans des régions présentant des extrêmes climatiques et/ou des variations de la qualité du carburant, notamment du gazole.

La présente invention tire profit de la présence d'un système SCR, et plus particulièrement de la présence d'un système de chauffage associé à celui-ci pour minimiser les coûts associés au réservoir d'additifs carburant (et au moyen d'injection de ces additifs dans le réservoir carburant) et éventuellement permettre des concentrations supérieures.

En effet, le système de chauffage permet de réduire la plage de températures d'utilisation de l'additif, dans laquelle peut se situer l'additif carburant, même si la température extérieure varie de façon beaucoup plus importante. Dans ces conditions, les conditions dans lesquelles s'effectuent l'additivation du carburant ont une moindre variabilité, notamment si on considère deux paramètres clefs à savoir la densité et la viscosité de l'additif carburant. Il en résulte notamment une gestion plus simple de la pompe d'additivation, en particulier une moindre nécessité de faire varier le débit, le régime moteur de la pompe (ce qui peut être obtenu en variant le ratio déplacement piston / rotation moteur de la pompe) ou la cylindrée réelle de la pompe (en variant le signal de commande, et/ou en modifiant la puissance du champ magnétique et/ou du ressort de rappel).

Minimiser les contraintes permet d'opérer avec un système à la fois plus robuste et moins onéreux et d'augmenter le volume disponible pour l'additif carburant (qui est normalement au plus égal à 80% du volume du réservoir d'additifs).

Rapprocher les deux réservoirs permet d'utilisé un carter commun, plastique ou métallique, rigide ou souple. Ce carter a une double fonction : d'une part minimiser le risque d'épandage sur la chaussée de l'additif carburant ou de l'agent SCR notamment en cas d'accident et d'autre part, confiner les deux réservoirs, et donc aider à homogénéiser la température des deux réservoirs.

De plus, il est alors possible d'utiliser le même grand volume pour ce réservoir, l'emplacement roue de secours par exemple le permettant, ce qui diminue d'autant les contraintes d'implantation du système.

Il est aussi possible de combiner les systèmes multiplexés et les thermocouples des deux systèmes, et ainsi réduire les coûts. Un unique calculateur dédié à ces réservoirs auxiliaires peut également être prévu, ce qui permet pour partie de s'affranchir du calculateur moteur du véhicule.

Enfin, ceci permet aussi d'améliorer l'accessibilité réservoir en après vente, et donc éventuellement de prévoir des intervalles de maintenance plus courts, mais avec des mélanges d'additifs conférant une plus large gamme d'avantages, ou plus performants.

Le tableau ci-dessous illustre quelques mélanges possibles, avec des formulations optimisées en fonction de l'intervalle de maintenance que l'on s'autorise, des prestations moteur et la durabilité des véhicules Diesel souhaitées pour répondre tant à l'amélioration constante de la satisfaction du client qu'à la résolution de problèmes clientèle liés à la mauvaise qualité des carburants pouvant être rencontrée par le client.

| Intervalle de maintenance | Mélange | Filtre à particules nécessitant un additif FAP | Filtre à particules ne nécessitant pas un additif FAP |
|---|---|---|---|
| 120000 km | Additif FAP | 7 ppm | |
| | Anti-oxydant | 4 ppm | 4 ppm |
| | Détergent | 80 ppm | 80 ppm |
| | Economiseur de carburant | 45 ppm | 45 ppm |
| 60000 km | Additif FAP | 7 ppm | |
| | Anti-oxydant | 4 ppm | 4 ppm |
| | Détergent | 100 ppm | 100 ppm |
| | Economiseur de carburant | 220 ppm | 250 ppm |
| | Pouvoir lubrifiant | | 40 ppm |
| 30000 km | Additif FAP | 7 ppm | |
| | Anti-oxydant | 4 ppm | 4 ppm |
| | Détergent | 100 ppm | 100 ppm |
| | Economiseur de carburant | 250 ppm | 250 ppm |
| | Pouvoir lubrifiant | 170 ppm | 170 ppm |
| | Filtrabilité | 185 ppm | 240 ppm |

La figure 1 est un schéma synoptique illustrant la structure et le fonctionnement d'un dispositif d'introduction de moyens formant additif couplé à un système SCR selon l'invention. Sur cette figure, on a en effet représenté schématiquement un véhicule automobile avec un moteur, par exemple un moteur dit Diesel, désigné dans son ensemble par la référence 1, alimenté en gazole à partir d'un réservoir de carburant 2, par intermédiaire d'une pompe d'injection 3. Cette pompe d'injection 3 est reliée au réservoir 2 par une conduite d'aspiration 4 sur laquelle est intercalé un filtre 5.

La conduite d'aspiration 4 comporte une partie d'extrémité opposée à la pompe 3 qui est plongée à l'intérieur du réservoir 2 pour déboucher, à sa partie inférieure. sous la forme d'une crépine d'aspiration 6 De plus, la pompe 3 est reliée aux cylindres du moteur 1 par des conduites assurant chacune alimentation d'un injecteur 9 associé à un cylindre du moteur. Des moyens à rampe commune d'alimentation peuvent également être envisagés.

Le réservoir 2 est équipé d'une jauge de niveau 7 permettant de déterminer la position du niveau du gazole dans ce réservoir 2. Il comporte également une tubulure de remplissage 8 débouchant dans la partie supérieure de ce réservoir 2 et équipée d'un bouchon de fermeture 8a. A ce réservoir est associé un réservoir d'additifs carburants 10 qui comporte typiquement un mélange d'additifs tels que décrits précédemment, parmi lesquels peut figurer notamment un additif d'aide à la régénération d'un filtre à particules monté dans la ligne d'échappement du véhicule. Ce réservoir d'additifs carburant est muni d'un bouchon de remplissage 11.

Une conduite 12 d'injection d'additif liquide est reliée au réservoir d'additif 10, au voisinage de sa partie inférieure. Une pompe de dosage 13 est intercalée sur la conduite 12 qui est reliée, à son extrémité opposée au réservoir d'additif 10, à un injecteur 14 débouchant directement dans le réservoir de carburant 2. Une conduite de retour 15 communiquant avec la conduite d'injection 12, en aval de la pompe 13, est reliée à la partie supérieure du réservoir d'additif 10. Un régulateur de pression 16 constitué par un clapet à bille comportant un ressort de tarage est intercalé sur la conduite de retour 15.

Le dispositif d'introduction automatique d'additifs selon l'invention comporte également un boîtier électronique de commande 20 intégré au véhicule et permettant d'assurer toutes les fonctions de réglage et de surveillance de l'introduction d'additif en quantités dosées dans le réservoir de carburant 2 du véhicule. Le dispositif d'introduction automatique d'additif comporte également des moyens de mesure de la quantité de carburant introduite dans le réservoir 2 au cours de chaque opération de réapprovisionnement. Ces moyens de mesure sont formés par exemple par un débitmètre monodirectionnel 17 placé directement dans la tubulure 8 de remplissage du réservoir de carburant 2. Le débitmètre 17 est relié au boîtier électronique 20 par un câble électrique 21 qui permet de transmettre automatiquement audit boîtier 20 la quantité de carburant introduite dans le réservoir 2 lors du réapprovisionnement de ce réservoir 2 en carburant, et cela même lorsque le véhicule est endormi

Le boîtier électronique 20 est relié par des câbles électriques, respectivement 23 et 24, à la pompe 13 et à l'injecteur 14 de manière à transmettre à ces éléments du dispositif d'introduction d'additif un signal de commande assurant une injection en quantité dosée de façon à assurer une concentration déterminée en additif dans le carburant, concentration reçue sous la forme d'un signal électrique représentatif par le boîtier électronique 20. Cette donnée relative à la concentration d'additif dans le carburant peut être également déterminée a priori et correspondre à une valeur fixe quelles que soient les conditions d'utilisation du moteur. Dans ce cas, les composants électroniques sont prévus de manière à prendre en compte cette valeur prédéterminée et invariable.

La jauge de niveau 7 associée au réservoir de carburant 2 est reliée par un câble électrique 22 au boîtier 20, de manière à transmettre à ce boîtier 20 ainsi qu'au conducteur du véhicule, un signal électrique représentatif du niveau de carburant à l'intérieur dudit réservoir 2. Une jauge de niveau 18 reliée au boîtier électronique 20 par un câble électrique 25 permet de transmettre à ce boîtier 20 un signal électrique lorsque le niveau d'additif dans le réservoir 10 est parvenu dans une position minimale voisine du fond de ce réservoir 10.

Le véhicule est également équipé d'un système de traitement d'oxydes d'azote présents dans la ligne d'échappement 30 d'un moteur de véhicule, notamment de type Diesel. Ces oxydes d'azote sont dirigés vers un catalyseur spécifique SCR 32, dans lequel est effectuée une réduction chimique. Pour que cette réduction ait lieu, il est nécessaire d'ajouter aux oxydes d'azote de l'ammoniac, par exemple contenu dans de l'urée liquide 34. Cette urée liquide est généralement stockée dans un réservoir SCR 36 installé dans le véhicule. Ce réservoir 36 est relié, via un conduit d'alimentation 38, à un injecteur spécifique 39, permettant d'injecter l'urée 34 dans la ligne d'échappement 30 du moteur.

Le réservoir SCR est muni d'un bouchon de remplissage 29, disposé avantageusement à côté du bouchon 11, ces deux bouchons étant protégés par des moyens communs, tels une trappe, de sorte que l'on accède concomitamment aux deux bouchons.

Afin d'éviter que les gaz présents dans cette ligne d'échappement 30 ne remontent vers le réservoir 36, on peut prévoir une vanne anti-retour 33 située dans le tube de retour 31. Cette vanne 33 serait telle qu'elle ne s'ouvre que dans le sens réservoir /ligne d'échappement, lorsque la pression devient supérieure à une valeur prédéterminée, par exemple de l'ordre de 50 millibars ou de 100 millibars en fonction du type de vanne utilisé.

Le réservoir SCR est équipé d'une jauge de niveau 28 reliée au boîtier électronique 20 par un câble électrique 25 permet de transmettre à ce boîtier 20 un signal électrique lorsque le niveau d'urée dans le réservoir 36 est parvenu dans une position minimale voisine du fond de ce réservoir 36.

Une sonde de température 19 disposée dans les réservoirs d'additifs couplés (10,36) permet de transmettre au boîtier électronique 20, par l'intermédiaire d'un câble électrique 26, un signal représentatif de la température de cet additif liquide à l'intérieur dudit réservoir 10

Le boîtier électronique 20 comporte au moins une sortie 27 constituée par au moins un câble électrique relié à des voyants qui peuvent être situés avantageusement dans l'habitacle du véhicule automobile.

L'allumage d'un premier voyant est obtenu lorsque le niveau d'additif détecté par la jauge 18 dans le réservoir d'additif 10 est parvenu dans la position correspondant au niveau minimal voisin du fond de ce réservoir 10 et allumage d'un second voyant est obtenu lorsque le niveau de carburant détecté par la jauge 7 dans le réservoir de carburant 2 est parvenu dans une position correspondant au niveau minimal voisin du fond de ce réservoir de carburant 2.

Certains éléments du dispositif d'introduction d'additif peuvent être constitués par des éléments utilisés de manière classique pour la construction des moteurs de véhicules automobiles et de leurs organes de commande. C'est ainsi que l'ensemble d'injection d'additif comprenant la pompe 13, le régulateur de pression 16 et éventuellement l'injecteur 14 peut être constitué par un dispositif d'injection classique tel qu'utilisé sur les véhicules automobiles comportant un moteur à injection.

On va décrire le fonctionnement du dispositif d'introduction automatique en quantités dosées d'additif dans le réservoir de carburant du véhicule automobile pour maintenir à une valeur prédéterminée la concentration d'additif dans le carburant. Lorsque l'utilisateur du véhicule effectue un réapprovisionnement du réservoir 2 en carburant, il introduit le pistolet de la pompe dans la tubulure de remplissage 8. Ainsi, au cours de l'écoulement du carburant dans cette tubulure 8, le débitmètre 17 mesure directement dans la tubulure 8, la quantité de carburant introduite dans le réservoir 2.

Le débitmètre 17 transmet donc par le câble électrique 21 le signal représentatif de la quantité de carburant introduite dans le réservoir 2. Au démarrage du moteur 1, le contact électrique du véhicule permet de mettre en fonctionnement le boîtier électronique 20 pour la détermination et la réalisation de l'injection d'additif dans le réservoir de carburant 2.

A cet effet, le boîtier de commande 20 effectue le calcul de la quantité d'additif à introduire dans le réservoir 2, en fonction de la quantité de carburant introduite dans ce réservoir 2 et de la concentration prédéterminée en additif du carburant, pour obtenir des conditions de fonctionnement satisfaisantes du filtre à particules

Le signal représentatif de la quantité d'additif à introduire dans le réservoir de carburant 2 est transformé en un signal de commande de la pompe d'injection 13 et en un signal de commande de injecteur 14. Le signal de commande de l'injecteur 14 permet de maintenir cet injecteur ouvert pendant un temps suffisant pour réaliser l'injection de la quantité déterminée d'additif à pression constante dans le réservoir de car-burant2. la pompe 13 restant en fonctionnement pendant un temps suffisant pour réaliser cette injection directement dans ledit réservoir de carburant 2.

A l'issue de l'injection d'additif, le gazole contenu dans le réservoir 2 présente une concentration en additif qui correspond parfaitement à la concentration prédéterminée nécessaire pour obtenir un fonctionnement satisfaisant notamment du filtre à particules. En outre, la concentration en additif du gazole dans le réservoir 2 est parfaitement homogène butait du brassage assuré par la pompe d'injection 3.

Le moteur 1 et le système de post traitement qui lui est associé dans la ligne d'échappement peuvent alors fonctionner dans des conditions satisfaisantes.

La température des additifs injectés directement dans le réservoir 2 peut être réglée grâce à la jauge de température 19 et un circuit de mise en température de l'additif dans le réservoir 10. Selon une variante, la température mesurée par la jauge 19 peut être prise en compte par le boîtier électronique 20 pour calculer le temps d'injection d'additif à température constante. En effet, le temps d'injection d'une quantité déterminée d'additif à pression constante varie en fonction de la viscosité, donc de la température de cet additif.

## Revendications

1. Véhicule comportant un moteur thermique, alimenté en carburant par un réservoir de carburant associé par des premiers moyens d'injection à un réservoir d'additifs carburant, et un réservoir d'agent de réduction sélective associé à des seconds moyens d'injection de cet agent de réduction sélective dans la ligne d'échappement du moteur, **caractérisé en ce que** le réservoir d'additifs carburant est placé dans ou à côté du réservoir d'agent de réduction sélective.

2. Véhicule selon la revendication 1, **caractérisé en ce que** le réservoir d'additifs carburant et le réservoir d'agent de réduction sélective sont placés dans un carter commun.

3. Véhicule selon la revendication 1 ou la revendication 2, **caractérisé en ce qu'**il comporte un moyen de chauffage commun à au moins une partie du réservoir d'additif carburant et une partie du réservoir d'agent de réduction sélective.

4. Véhicule selon l'une quelconque des revendications précédentes, **caractérisé en ce que** le réservoir d'agent de réduction sélective est muni de moyens de chauffage et **en ce que** le réservoir d'additifs carburants comporte au moins une paroi baignée par l'agent de réduction sélective.

5. Véhicule selon l'une quelconque des revendications précédentes, dans lequel les premier et second moyens d'injection sont au moins pour partie pilotés par une unité de contrôle moteur placée à distance des réservoirs d'additifs et d'agent de réduction sélective, et en ce que les commandes de pilotage transitent par une ligne de commande commune.

6. Véhicule selon l'une quelconque des revendications 1 à 4, sont au moins pour partie pilotés par un superviseur unique placé à proximité des réservoirs, ledit superviseur recevant des informations d'une unité de contrôle moteur placée à distance des réservoirs et du superviseur, lesdites informations transitant par une ligne de commande commune.

7. Véhicule selon l'une quelconque des revendications précédentes, dans lequel ledit réservoir d'agent de réduction sélective est un réservoir d'une solution aqueuse d'urée.

8. Véhicule selon l'une quelconque des revendications précédentes, dans lequel ledit réservoir d'agent de réduction sélective a une capacité comprise entre 20 et 80 litres, de préférence entre 40 et 60 litres.

9. Véhicule selon l'une quelconque des revendications précédentes, dans lequel ledit réservoir d'additifs carburant comprend au moins une solution ou une dispersion d'un additif d'aide à la régénération d'un moyen de dépollution placé dans la ligne d'échappement du véhicule.

10. Véhicule selon la revendication 9, **caractérisé en ce que** ledit moyen de dépollution est un filtre à particules.

11. Véhicule selon l'une quelconque des revendications précédentes, dans lequel le réservoir d'additifs carburants comporte une solution ou une dispersion d'au moins un additif choisi dans le groupe comprenant un additif d'amélioration de la distribution de carburant dans le moteur, un additif d'amélioration des performances de fonctionnement du moteur, et un additif d'amélioration de la stabilité du fonctionnement du moteur.

12. Véhicule selon l'une quelconque des revendications précédentes, dans lequel ledit réservoir d'additifs carburant a une capacité comprise entre 1 et 3,5 litres.

13. Véhicule selon l'une quelconque des revendications précédentes, **caractérisé en ce que** le réservoir d'additifs carburant et respectivement, le réservoir d'agent de réduction sélective, sont tous deux munis de moyens de remplissage, lesdits moyens de remplissage étant accessibles par une trappe commune.
